# EUROPEAN PATENT APPLICATION

(11) **EP 1 182 885 A2**
(43) Date of publication of application: **27.02.2002**
(21) Application number: 01119432.1
(22) Date of filing: 13.08.2001
(51) Int. Cl.: H04N 7/26

(54) **Method and apparatus for image quality enhancement**

(30) Priority: 15.08.2000 GB 0020007
(71) Applicant: MOTOROLA, INC., Schaumburg, IL 60196 (US)
(72) Inventor: Hobson, Paola Marcella, Alton GU34 2SQ, Hampshire (GB); Hare, Jonathan Stephen, Tadley, Hants RG26 3UA (GB)
(74) Representative: Treleven, Colin

(57) **Abstract**

The invention concerns image enhancement, particularly the enhancement of images which have been encoded. The invention leads to a better image quality. The images may be part of a video sequence for transmission, or which has been received after transmission.

One method in accordance with the invention removes artifacts from block transform-based encoded/decoded images. Another method in accordance with the invention involves, in sequence, enhancing a received image by separating the image into its constituent colours, performing a filtering step, re-combining the colours, convolving the image with a weighted filter matrix, and then re-scaling the pixels of the image.

The methods of the invention permit a method of performing a quality assessment on a decoded image. The method of quality assessment comprises the steps of modifying the decoded image to produce a substitute source image, and comparing the decoded image to the substitute source image in accordance with a quality assessment technique, thereby producing a quality assessment metric.

## Description

### Field Of The Invention

The present invention relates to video image processing systems in general. More particularly, the invention realtes to methods for enhancing received images and for removing artifacts from decoded images. The methods may be used in support of quality assessment techniques.

### Background Of The Invention

Block-based low-bit-rate video coding techniques, such as ITU Recommendation ITU-T H.263, tend to introduce visible block artifacts into decoded video images. Decoding may for example occur immediately after encoding, in a checking operation. Alternatively, decoding may occur after an encoded image has been transmitted to another location, and received by a receiver. Techniques may be used to prevent and/or remove artifacts to some degree, and to increase the quality of the images.

Annex J of H.263 describes a technique known as a "deblocking filter mode" to remove block artifacts from decoded video images. In accordance with this technique, block edges of the image are smoothed by filtering the edges of 8x8 pixel blocks. Whilst Annex J does provide an improvement in quality around some areas of the image, it also introduces new artifacts into the image which often stand out much more than the block edge artifacts would have if they had not been filtered. A further limitation of Annex J is that it has to be implemented at both the encoder and decoder. Thus, where Annex J has not been applied to a video image at the encoder, its techniques may not be used at the decoder to improve the image quality.

Another technique for removing artifacts from images is described by Thomas R. Crimmins in "Geometric Filter for Speckle Reduction," Applied Optics, Vol. 25 No 10, 15 May 1985, pp. 1428 - 1443, as well as in United States Patent Number 4,783,753 to Crimmins entitled "System for Reducing Speckle Noise," the disclosures of which are incorporated herein by reference. Crimmins' technique describes removing speckle noise from radar images by smoothing the image and thus gradually reducing the speckle noise. This serves to 'restore' the image. The application of Crimmins' technique on block-based coded video images is not known, as speckle noise is not generally associated with such images, and Crimmins' technique would blur such images.

In addition to the difficulties associated with removing visible block artifacts from decoded video images, there are difficulties associated with performing a quality assessment of a decoded video image.

Image quality assessments are generally employed in order to provide feedback that may be used to optimize the encoding process. However, known image quality assessment techniques, such as determining a decoded image's Peak Signal to Noise Ratio (PSNR), require a comparison of the decoded video image with the original, unencoded image. Thus, where the unencoded image is not available after the image is decoded, such as at a remote decoder during a live video transmission, formal subjective or objective quality assessments are precluded.

There is therefore a requirement for a post-processing method of improving the quality of a decoded video image that does not introduce new artifacts into the image or blur the image, and that improves the quality of the decoded image such that the decoded image more closely resembles the original, unencoded image. A decoded image thus improved may then be used in place of the unencoded image, in order to allow for an objective or subjective quality assessment to be made. The assessment made may approximate the assessments made where the original, unencoded image is available.

The following publications are believed to be descriptive of the current state of the art of video image enhancement and quality assessment technologies and terms related thereto:
(i) Lambrecht, Branden et al., "Quality assessment of motion rendition in video coding," IEEE transactions on circuits and systems for video technology, Vol. 9 No 5 August 1999, pp. 766-782.
(ii) ITU Recommendation ITU-T H.263 Version 2 (Draft), "Draft Recommendation for H.263+."
(iii) ITU Recommendation ITU-R BT.500-7, "Methodology for the subjective assessment of quality of television images."
(iv) ITU Recommendation ITU-T P.910, "Audio-Visual quality in multimedia services - Subjective video quality assessment methods for multimedia applications."

The applicant is aware of documents GB-A-2321357, EP-A-0886444 and US-A-4783753.

### Summary Of The Invention

The present invention seeks to provide improved methods and apparatus for enhancing a received image, and for removing artifacts from decoded images, and can support quality assessment techniques. These methods and corresponding apparatus overcome limitations of the prior art.

The present invention applies specially-modified despeckling and unsharp mask filtering techniques in a novel combination during a post-processing stage of an image. The image is one that has been encoded/decoded in accordance with a block- transform based video coding protocol, such as H.263, JPEG, MPEG2, H.261, or any block-transform based protocol, such as Discrete Cosine Transform (DCT).

The present invention is of particular benefit when applied to a decoded video image where the video has been so compressed that block boundaries become visually apparent due to coarse quantization. The visual impact of these block boundaries is suppressed with little or no degradation to the main features of the image, resulting in overall image quality improvements.

The resulting post-processed image is of a sufficient quality to be used in support of objective and subjective image quality assessment techniques where the original, unencoded image is not available for use in such an assessment. In objective image quality assessment, such as PSNR, a quantitative difference between a source image and a processed image is calculated. During post-processing, the present invention generates a substitute source image from a decoded image, the substitute image approaching the quality of the original, unencoded image. The decoded image may then be measured against the substitute (post-processed) image using conventional techniques. In subjective image quality assessment, such as in double stimulus testing where the viewer scores an impaired image against a source image, the post-processed image may similarly be used in place of the original, unencoded source image.

The present invention provides a method of performing a quality assessment on a decoded image, the method including the steps of modifying the decoded image to produce a substitute source image, and comparing the decoded image to the substitute source image in accordance with a quality assessment technique, thereby producing a quality assessment metric.

The present invention also provides apparatus for performing a quality assessment on a decoded image, including means for modifying the decoded image to produce a substitute source image, and means for comparing the decoded image to the substitute source image in accordance with a quality assessment technique, thereby producing a quality assessment metric.

In a further embodiment, the present invention comprises a method of enhancing a received image, the method comprising in sequence the steps of:
a) decoding the received image;
b) separating out the colour components of the received image;
c) applying a filter to groups of three pixels of each colour component;
d) re-combining the colour components of the image;
e) convolving the image with a weighted filter matrix, the filtering weight being a parameter W; and
f) re-scaling the pixel values in dependence on the value of the parameter W.

In accordance with another embodiment of the present invention, a method is provided for removing artifacts from block transform-based encoded/decoded images, the method including the steps of a) bounding a decoded image in an image area I with a one-pixel-wide boundary of a plurality of boundary pixels, b) providing a buffer area B of at least equal size to the bounded image, c) for each non-boundary pixel X in the image area I and each of a plurality of pixel pairs Y and Z being oppositely-adjacent to pixel X, the X, Y, and Z in the image area I being represented as X(I), Y(I), and Z(I) respectively, and the pixels in the buffer area B corresponding to X(I), Y(I), and Z(I) being represented as X(B), Y(B), and Z(B) respectively, and performing the steps d)- k) below,
d) if Y(I) >= X(I) + 2 then setting X(B) = X(I) + 1 and otherwise setting X(B) = X(I), e) if Y(B) > X(B) and Z(B) >= X(B) then setting X(I) = X(B) + 1 and otherwise setting X(I) = X(B), f) if Z(I) >= X(I) + 2 then setting X(B) = X(I) + 1 and otherwise setting X(B) = X(I), g) if Z(B) > X(B) and Y(B) >= X(B) then setting X(I) = X(B) + 1 and otherwise setting X(I) = X(B), h) if Z(I) <= X(I) - 2 then setting X(B) = X(I) - 1 and otherwise setting X(B) = X(I), i) if Z(B) < X(B) and Y(B) <= X(B) then setting X(I) = X(B) - 1 and otherwise setting X(I) = X(B), j) if Y(I) <= X(I) - 2 then setting X(B) = X(I) - 1 and otherwise setting X(B) = X(I), k) If Y(B) < X(B) and Z(B) <= X(B) then setting X(I) = X(B) - 1 and otherwise setting X(I) = X(B), and m) sharpening the image in the image area.

The present invention provides apparatus for enhancing a received image, the apparatus comprising:
a) means for decoding the received image;
b) means for separating out the colour components of the received image;
c) a filter for filtering groups of three pixels of each colour component;
d) means for re-combining the colour components of the image;
e) convolving means, for convolving the image with a weighted filter matrix, the filtering weight being a parameter W; and
f) means for re-scaling the pixel values in dependence on the value of the parameter W.

The present invention further provides apparatus for removing artifacts from block transform-based encoded/decoded images including a) means for bounding a decoded image in an image area I with a one-pixel-wide boundary of a plurality of boundary pixels, b) means for providing a buffer area B of at least equal size to the bounded image, c) means for operation on each non-boundary pixel X in the image area I and each of a plurality of pixel pairs Y and Z being oppositely-adjacent to pixel X, the X, Y, and Z in the image area I are represented as X(I), Y(I), and Z(I) respectively, and the pixels in the buffer area B corresponding to X(I), Y(I), and Z(I) are represented as X(B), Y(B), and Z(B) respectively, the means for operation comprising means d)-k) as follows: d) means, if Y(I) >= X(I) + 2, for setting X(B) = X(I) + 1 and otherwise for setting X(B) = X(I), e) means, if Y(B) > X(B) and Z(B) >= X(B), for setting X(I) = X(B) + 1 and otherwise for setting X(I) = X(B), f) means, if Z(I) >= X(I) + 2, for setting X(B) = X(I) + 1 and otherwise for setting X(B) = X(I), g) means, if Z(B) > X(B) and Y(B) >= X(B), for setting X(I) = X(B) + 1 and otherwise for setting X(I) = X(B), h) means, if Z(I) <= X(I) - 2, for setting X(B) = X(I) - 1 and otherwise for setting X(B) = X(I), i) means, if Z(B) < X(B) and Y(B) <= X(B), for setting X(I) = X(B) - 1 and otherwise for setting X(I) = X(B), j) means, if Y(I) <= X(I) - 2, for setting X(B) = X(I) - 1 and otherwise for setting X(B) = X(I), k) means, if Y(B) < X(B) and Z(B) <= X(B), for setting X(I) = X(B) - 1 and otherwise for setting X(I) = X(B), and m) means for sharpening the image in the image area.

### Brief Description Of The Drawings

The present invention will be understood and appreciated more fully from the following detailed description taken in conjunction with the appended drawings in which:
Figs. 1A and 1B, taken together, are a simplified flowchart illustration of a method for removing artifacts from decoded video images, the method operative in accordance with a preferred embodiment of the present invention;
Fig. 2 is a simplified illustration of a pixel block useful in understanding the method of Figs. 1A and 1B;
Fig. 3 is a simplified graph illustration of the effect that the method of Figs. 1A and 1B has on pixel values after the first iteration is performed until step 230;
Fig. 4A is an original (unencoded) source image;
Fig. 4B is the image of Fig. 4A after it has been H.263 encoded and decoded at a rate of 19.2 Kbps;
Fig. 4C is the image of Fig. 4B after steps 100 - 230 (i.e., one iteration) and 250 - 280 of the method of Fig. 1 have been applied to it;
Fig. 5 is a simplified graph illustration of comparative PSNR of an H.263 decoded image that has been post-processed using the method of Figs. 1A and 1B and of an H.263 decoded image to which Annex J filtering has been applied that has been post-processed using the method of Figs. 1A and 1B; and
Fig. 6 is the image of Fig. 4A after it has been H.263 encoded and decoded with Annex J at a rate of 19.2 Kbps.

### Detailed Description Of Preferred Embodiments

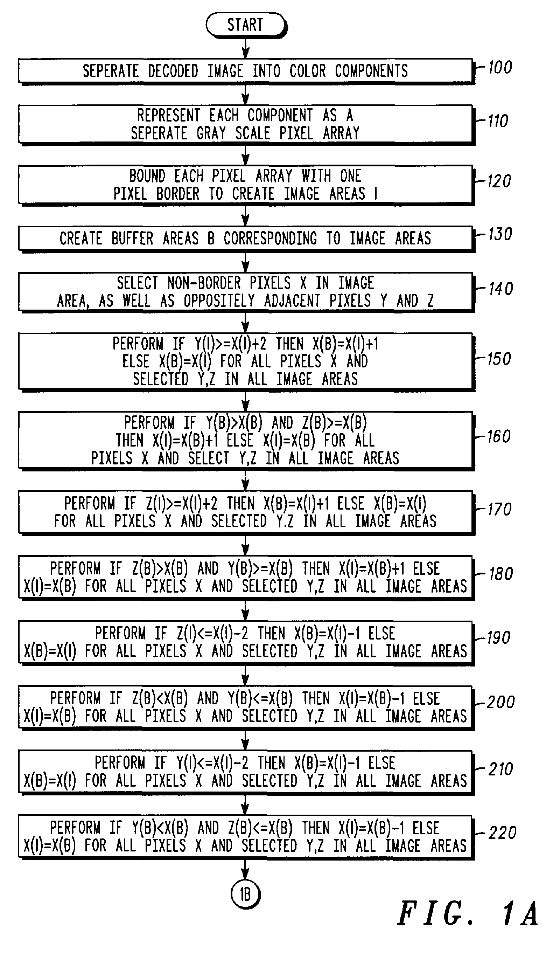

Reference is now made to Figs. 1A and 1B which, taken together, are a simplified flowchart illustration of a method for removing artifacts from decoded video images, the method operative in accordance with a preferred embodiment of the present invention. The method of Figs. 1A and 1B may be applied as a post-processing technique to a known block-based video coding protocol after decoding, and/or during encoding where decoding at the encoder is performed for control purposes.

In the method of Figs. 1A and 1B, a decoded compound color video image is separated into individual color components. These colour components may be Red, Green, and Blue, although other color base schemes may be used, such as YCbCr, or a simple grayscale scheme
where the image is not a color image (step 100). Each color component is preferably represented as an m x n pixel array with each pixel having a grayscale value between 0 and 255 (step 110). Each grayscale image is preferably bounded by a one-pixel border around it, with each border pixel preferably being set to a grayscale value of 0, 128, 255, or the mean value of all the pixels in the image. Each color component image and its border is referred to hereinafter as the component's "image area," and is represented by the letter I (step 120). Corresponding pixel arrays of equal size to each image area are designated for use as "buffer areas" represented by the letter B, where all pixels are preferably set initially to a grayscale value of 0 (step 130).

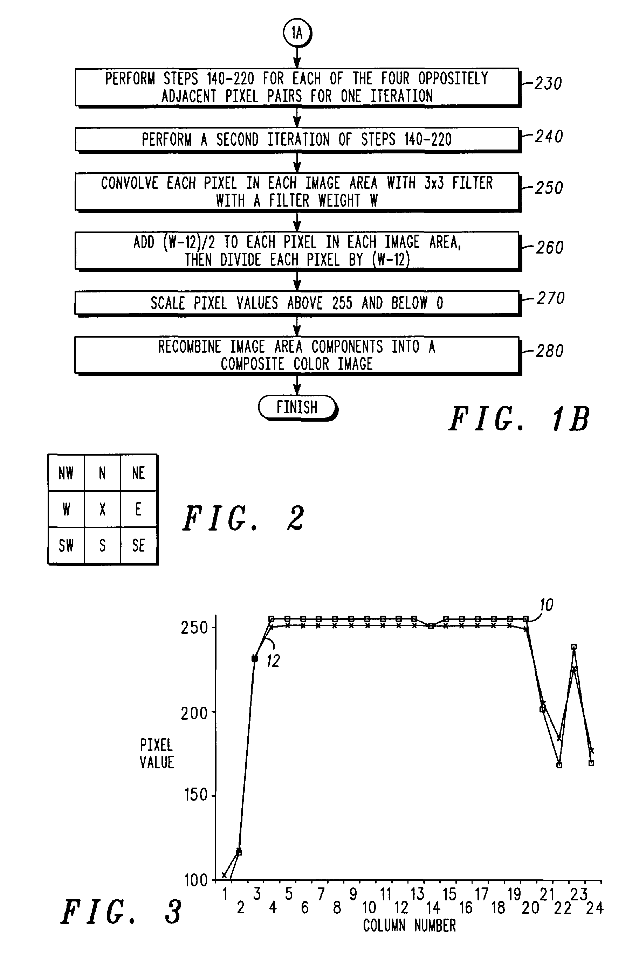

Additional reference is now made to Fig. 2, which is a simplified illustration of a pixel block useful in understanding the method of Figs. 1A and 1B. The letter X represents a currently-selected pixel, with adjacent pixels being represented by the letters NW, N, NE, W, E, SW, S, and SE respectively. Continuing with the method of Figs. 1A and 1B, each non-border pixel in each image area is selected in turn as pixel X in Fig. 2, as are a pair of two oppositely-adjacent pixels Y and Z, such as pixels S and N in Fig. 2 (step 140). The grayscale values of pixels X, Y, and Z are then compared in a series of eight passes through each image area as follows:

For each currently-selected pixel X and oppositely-adjacent pixels Y and Z in an image area I:
First Pass: If Y(I) >= X(I) + 2 then X(B) = X(I) + 1 else X(B) = X(I) (step 150)
Second Pass: If Y(B) > X(B) AND Z(B) >= X(B) then X(I) = X(B) + 1 else X(I) = X(B) (step 160)
Third Pass: If Z(I) >= X(I) + 2 then X(B) = X(I) + 1 else X(B) = X(I) (step 170)
Fourth Pass: If Z(B) > X(B) AND Y(B) >= X(B) then X(I) = X(B) + 1 else X(I) = X(B) (step 180)
Fifth Pass: If Z(I) <= X(I) - 2 then X(B) = X(I) - 1 else X(B) = X(I) (step 190)
Sixth Pass: If Z(B) < X(B) AND Y(B) <= X(B) then X(I) = X(B) - 1 else X(I) = X(B) (step 200)
Seventh Pass: If Y(I) <= X(I) - 2 then X(B) = X(I) - 1 else X(B) = X(I) (step 210)
Eighth Pass: If Y(B) < X(B) AND Z(B) <= X(B) then X(I) = X(B) - 1 else X(I) = X(B) (step 220)

Thus, using the first pass as an example, where oppositely-adjacent pixels N and S have been selected, if N(I), i.e. the pixel in the current image area above the one we are interested in as shown in Fig. 2, has a grayscale value that is two or more gray levels greater than our currently-selected pixel X(I), then store in the corresponding X pixel position of the buffer area X(B) the value of the gray level of the X(I) pixel incremented by 1. Otherwise, store the gray level value of X(I) into the buffer area at corresponding position X(B).

All non-border pixels in image area I are processed according to the first pass above.
Thereafter, all non-border pixels in image area I are processed according to the second pass above, and so on, until all eight passes have been completed for one selected oppositely-adjacent pixel pair, such as N/S. The above series of eight passes is performed four times, once for each of the four pixel pairs N/S, E/W, NE/SW, and NW/SE oppositely-adjacent to X, for a total of 32 passes per image area comprising one iteration (step 230). Preferably, a second iteration is performed using the resultant image from the previous iteration (step 240).

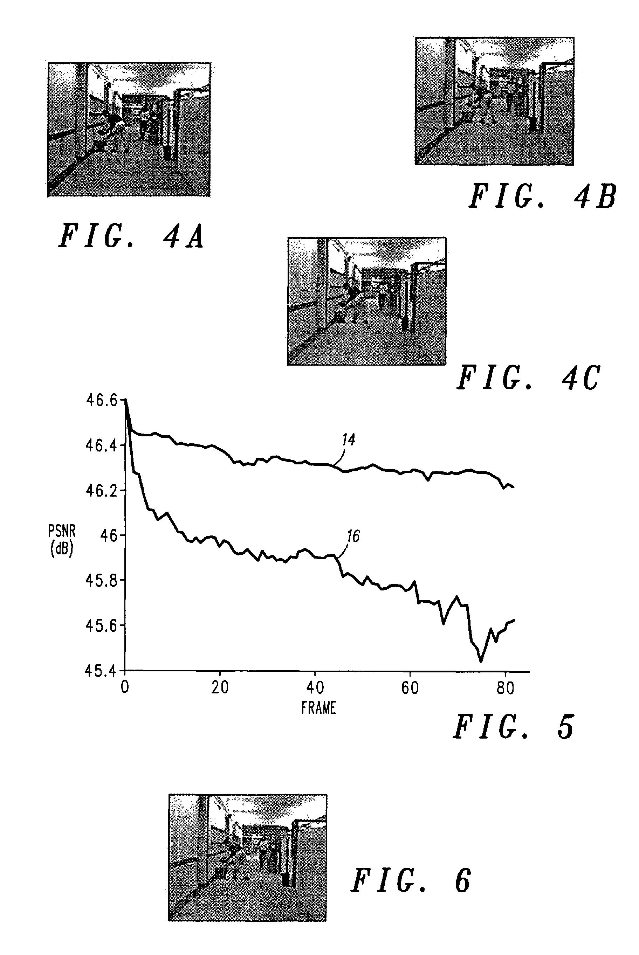

Fig. 3 is a simplified graph illustration of the effect that the method of Figs. 1A and 1B has on pixel values after the first iteration is performed until step 230. A line 10 shows the pixel values before the application of the method of Figs. 1A and 1B, and a line 12 shows the pixel values after the method has been applied. The effect of applying each group of passes to a sample line of an image shows that changes in the gradient are much smoother, and thus the image looks smoother.

The method of Figs. 1A and 1B continues with sharpening the image by applying a modified unsharp mask filtering technique where each non-border pixel of each image area is convolved with the 3x3 filter:
[-1, -2, -1]
[-2, W, -2]
[-1, -2, -1]
where W is the weight of the filter (step 250). Experimentation has shown that a filter weight W having a value of 33 provides optimal results.

Once the convolution has been completed, the constant (W-12)/2 is preferably added to each pixel value in each image area, after which each pixel is divided by (W-12) (step 260). The pixel values are then preferably scaled so that all the values above 255 are limited to 255 and all the values below 0 are limited to 0 (e.g., 256 is reduced to 255, and -3 is set to 0) (step 270).

All filtering described hereinabove is preferably performed using integer filters such that fractional pixel and coefficient values are eliminated at the end of each operation.

Once each image area has been sharpened, the image areas may be recombined into a composite color image using conventional techniques (step 280).

The method of Figs. 1A and 1B may be performed on all pixels in an image. Alternatively, the method may be performed on selected portions of a main image, such as on relatively slow-moving or stationary background portions of an image and not on faster-moving foreground or other specially-selected portions of an image. Alternatively, still images that have no moving portion may be improved, where segmentation may be used to identify key objects in a still image to which the method of Figs. 1A and 1B may be applied. Image portions may be isolated using any conventional technique.

Reference is now made to Fig. 4A, which is an original source image prior to encoding, Fig. 4B, which is the image of Fig. 4A after H.263 encoding and decoding at a rate of 19.2 Kbps, the image of Fig. 4B being in Quarter Common Intermediate Format (QCIF) format, and Fig. 4C, which is the image of Fig. 4B after steps 100 - 230 (i.e., one iteration) and 250 - 280 of the method of Fig. 1 have been applied to it. It may be seen that the image of Fig. 4C exhibits fewer effects from block artifacts than does the image of Fig. 4B.

It is a particular feature of the present invention that the post-processed image can be used as a source image for comparison with the decoded image in support of subjective (e.g., Double Stimulus Continuous Quality (DSCQ) rating) and objective (e.g., PSNR) quality assessment techniques. In such a comparison, the post-processed image can now be used as a substitute 'source' image in place of the original, unencoded image. Fig. 5 is a simplified graph illustration in which a line 14 represents the PSNR of an H.263 decoded image stream that has been post-processed using the method of Figs. 1A and 1B, where the PSNR has been calculated relative to the H.263 decoded image stream. Also in Fig. 5, a line 16 represents the PSNR of an H.263 decoded image stream to which Annex J filtering has been applied, and that has been post-processed using the method of Figs. 1A and 1B, where the PSNR has been calculated relative to the H.263 decoded image stream to which Annex J has been applied. The data represented in Fig. 5 are of a H.263 QCIF image stream at a bit rate of 19.2 Kb/sec. It may be seen from Fig. 5 that the PSNR of the post-processed H.263 decoded image stream to which Annex J filtering has not been applied is higher than the PSNR of the post-processed H.263 decoded image stream to which Annex J filtering has been applied.

Further reference is now made to Fig. 6 which is the encoded and decoded image of Fig. 4B to which Annex J has been applied. It may be seen that the image of Fig. 6 exhibits artifacts not seen in either of Figs. 4B and 4C and which have thus been introduced by Annex J. Examples of such artifacts are visible on the wall surface at the upper left edge of the image of figure 6.

Experimentation has also shown that the subjective quality of a post-processed H.263 decoded image to which Annex J filtering has been applied (Fig. 6) as compared with the original image (Fig. 4A) is lower than that of the post-processed H.263 decoded image to which Annex J filtering has not been applied (Fig. 4C) likewise as compared with the original image (Fig. 4A), with the former rated at an average of 11.8 perceptible defects versus the latter with an average of 3.6 perceptible defects. This measurement results from informal subjective testing with experts. Thus a correlation between objective and subjective measurements may be seen.

The apparatus of the present invention may take the form of an application specific integrated circuit. However, a suitably programmed processor of more general type may be used to provide apparatus showing the effects of the invention.

The present invention may be used to advantage in a video transmission system. For example, an image may form part of a video sequence for transmission over a radio link. Prior to transmission, the image is encoded. Once received by a receiver at the other end of the radio link, the image is decoded. The present invention may be used to advantage in a mobile- or portable radio or telephone. Such a mobile communications device may form part of a GSM, UMTS or iDEN communications system.

While the methods and apparatus disclosed herein may or may not have been described with reference to specific hardware or software, the methods and apparatus have been described in a manner sufficient to enable persons of ordinary skill in the art to readily adapt commercially available hardware and software as may be needed to reduce any of the embodiments of the present invention to practice without undue experimentation and using conventional techniques.

While the present invention has been described with reference to a few specific embodiments, the description is intended to be illustrative of the invention as a whole and is not to be construed as limiting the invention to the embodiments shown. It is appreciated that various modifications may occur to those skilled in the art that, while not specifically shown herein, are nevertheless within the true scope of the invention, as defined in the appended claims.

## Claims

1. A method of performing a quality assessment on a decoded image, the method comprising the steps of:
modifying said decoded image to produce a substitute source image; and
comparing said decoded image to said substitute source image in accordance with a quality assessment technique, thereby producing a quality assessment metric.

2. A method according to claim 1, wherein said comparing step comprises determining a Peak Signal to Noise Ratio (PSNR) for said decoded image relative to said substitute source image.

3. A method according to claim 1, wherein said comparing step comprises determining a Double Stimulus Continuous Quality (DSCQ) rating for said decoded image relative to said substitute source image.

4. Apparatus for performing a quality assessment on a decoded image comprising:
means for modifying said decoded image to produce a substitute source image; and
means for comparing said decoded image to said substitute source image in accordance with a quality assessment technique, thereby producing a quality assessment metric.

5. Apparatus according to claim 4, wherein:
said means for comparing is operative to determine a Peak Signal to Noise Ratio (PSNR) for said decoded image relative to said substitute source image.

6. Apparatus according to claim 4, wherein:
said means for comparing is operative to determine a Double Stimulus Continuous Quality (DSCQ) rating for said decoded image relative to said substitute source image.

7. A method of enhancing a received image, the method comprising in sequence the steps of:
a) decoding the received image;
b) separating out the colour components of the received image;
c) applying a filter to groups of three pixels of each colour component;
d) re-combining the colour components of the image;
e) convolving the image with a weighted filter matrix, the filtering weight being a parameter W; and
f) re-scaling the pixel values in dependence on the value of the parameter W.

8. A method for removing artifacts from block transform-based encoded/decoded images, the method comprising the steps of:
a) bounding (120) a decoded image in an image area I with a one-pixel-wide boundary of a plurality of boundary pixels;
b) providing (130) a buffer area B of at least equal size to said bounded image;
c) for each (140) non-boundary pixel X in said image area I and each of a plurality of pixel pairs Y and Z being oppositely-adjacent to pixel X, wherein X, Y, and Z in said image area I are represented as X(I), Y(I), and Z(I) respectively, and wherein pixels in said buffer area B corresponding to X(I), Y(I), and Z(I) are represented as X(B), Y(B), and Z(B) respectively, performing steps d) -k) below:
d) if Y(I) >= X(I) + 2 then setting X(B) = X(I) + 1 else setting X(B) = X(I)(150);
e) if Y(B)> X(B) AND Z(B) >= X(B) then setting X(I) = X(B) + 1 else setting X(I) = X(B) (160);
f) if Z(I) >= X(I) + 2 then setting X(B) = X(I) + 1 else setting X(B) = X(I) (170);
g) if Z(B) > X(B) AND Y(B) >= X(B) then setting X(I) = X(B) + 1 else setting X(I) = X(B) (180);
h) if Z(I) <= X(I) - 2 then setting X(B) = X(I) - 1 else setting X(B) = X(I) (190);
i) if Z(B) < X(B) AND Y(B) <= X(B) then setting X(I) = X(B) - 1 else setting X(I) = X(B) (200);
j) if Y(I) <= X(I) - 2 then setting X(B) = X(I) - 1 else setting X(B) = X(I)(210);
k) if Y(B) < X(B) AND Z(B) <= X(B) then setting X(I) = X(B) - 1 else setting X(I) = X(B) (220); and
m) sharpening (250,260,270) said image in said image area.

9. A method according to claim 8, further comprising the steps of:
separately performing (100) steps a - m on each of a plurality of color components of said decoded image; and
recombining (280) said plurality of color components into a composite color image.

10. A method according to claim 8, further comprising the step of:
performing (240) steps a - k at least two times and thereafter performing step m.

11. A method according to claim 8, wherein said sharpening step m comprises:
convolving (250) each of said pixels in said image area with a 3x3 filter being
[-1, -2, -1]
[-2, W, -2]
[-1, -2, -1]
where W is the weight of the filter;
adding (260) (W-12)/2 to each of said pixels in said image area;
dividing (260) each of said pixels in said image area by (W-12);
rounding (270) to 255 any of said pixels in said image area having a grayscale value exceeding 255; and
rounding (270) to 0 any of said pixels in said image area having a grayscale value less than 0.

12. A method according to claim 11, wherein W=33.

13. A method according to claim 8, wherein
said boundary pixels have a grayscale value of any of 0, 128, 255, and the mean value of all the pixels in the image.

14. A method according to claim 8, further comprising:
isolating a portion of a main decoded image for use as said decoded image.

15. Apparatus for enhancing a received image, the apparatus comprising:
a) means for decoding the received image;
b) means for separating out the colour components of the received image;
c) a filter for filtering groups of three pixels of each colour component;
d) means for re-combining the colour components of the image;
e) convolving means, for convolving the image with a weighted filter matrix, the filtering weight being a parameter W; and
f) means for re-scaling the pixel values in dependence on the value of the parameter W.

16. Apparatus for removing artifacts from block transform-based encoded/decoded images comprising:
a) means (120) for bounding a decoded image in an image area I with a one-pixel-wide boundary of a plurality of boundary pixels;
b) means (130) for providing a buffer area B of at least equal size to said bounded image;
c) means for operation on each non-boundary pixel X in said image area I and each of a plurality of pixel pairs Y and Z being oppositely-adjacent to pixel X, wherein X, Y, and Z in said image area I are represented as X(I), Y(I), and Z(I) respectively, and wherein pixels in said buffer area B corresponding to X(I), Y(I), and Z(I) are represented as X(B), Y(B), and Z(B) respectively, the means for operation comprising means d)-k) below:
d) means (150), if Y(I) >= X(I) + 2, for setting X(B) = X(I) + 1 else for setting X(B) = X(I);
e) means (160), if Y(B) > X(B) AND Z(B) >= X(B), for setting X(I) = X(B) + 1 else for setting X(I) = X(B);
f) means (170), if Z(I) >= X(I) + 2, for setting X(B) = X(I) + 1 else for setting X(B) = X(I);
g) means (180), if Z(B) > X(B) AND Y(B) >= X(B), for setting X(I) = X(B) + 1 else for setting X(I) = X(B);
h) means (190), if Z(I) <= X(I) - 2, for setting X(B) = X(I) - 1 else for setting X(B) = X(I);
i) means (200), if Z(B) < X(B) AND Y(B) <= X(B), for setting X(I) = X(B) - 1 else for setting X(I) = X(B);
j) means (210), if Y(I) <= X(I) - 2, for setting X(B) = X(I) - 1 else for setting X(B) = X(I);
k) means (220), if Y(B) < X(B) AND Z(B) <= X(B), for setting X(I) = X(B) - 1 else for setting X(I) = X(B); and
m) means (250,260,270) for sharpening said image in said image area.

17. Apparatus according to claim 16, further comprising:
means (100) for separately performing steps a - m on each of a plurality of color components of said decoded image; and
means (280) for recombining said plurality of color components into a composite color image.

18. Apparatus according to claim 16, further comprising:
means (240) for performing steps a - k at least two times and thereafter performing step m.

19. Apparatus according to claim 16, wherein said means for sharpening comprises:
means (250) for convolving each of said pixels in said image area with a 3x3 filter being
[-1, -2, -1]
[-2, W, -2]
[-1, -2, -1]
where W is the weight of the filter;
means (260) for adding (W-12)/2 to each of said pixels in said image area;
means (260) for dividing each of said pixels in said image area by (W-12);
means (270) for rounding to 255 any of said pixels in said image area having a grayscale value exceeding 255; and
means (270) for rounding to 0 any of said pixels in said image area having a grayscale value less than 0.

20. Apparatus according to claim 19, wherein W=33.

21. Apparatus according to claim 16, wherein:
said boundary pixels have a grayscale value of any of 0, 128, 255, and the mean value of all the pixels in the image.

22. Apparatus according to claim 16, further comprising:
means for isolating a portion of a main decoded image for use as said decoded image.
